# EUROPÄISCHE PATENTSCHRIFT

(11) **EP 3 016 555 B1**
(45) Veröffentlichungstag und Bekanntmachung des Hinweises auf die Patenterteilung: **15.11.2017**
(21) Anmeldenummer: 14731672.3
(22) Anmeldetag: 23.06.2014
(51) Int. Cl.: A47J 31/36, A47J 31/44

(54) **KAFFEEVOLLAUTOMAT MIT EINER SPINDELBRÜHEINHEIT**
FULLY AUTOMATIC COFFEE MACHINE HAVING A SPINDLE BREWING UNIT
MACHINE À CAFÉ AUTOMATIQUE POURVUE D'UNE UNITÉ D'INFUSION À BROCHE

(30) Priorität: 02.07.2013 DE 102013212846
(43) Veröffentlichungstag der Anmeldung: 11.05.2016
(73) Patentinhaber: BSH Hausgeräte GmbH, 81739 München (DE)
(72) Erfinder: HAAS, Michael, 88279 Amtzell (DE); HUBER, Michael, 6341 Ebbs (AT); OSTERMAIER, Albert, 83371 Stein a.d. Traun (DE); STROBL, Robert, 83246 Unterwössen (DE)
(86) Internationale Anmeldenummer: PCT/EP2014/063162
(87) Internationale Veröffentlichungsnummer: WO 2015/000732

(56) Entgegenhaltungen:
- EP-A1- 1 743 553
- WO-A1-01/34008
- WO-A1-2004/069012
- WO-A1-2009/056426
- WO-A1-2012/111883

## Beschreibung

Die Erfindung betrifft einen Kaffeevollautomaten für Haushaltszwecke, umfassend eine Spindelbrüheinheit mit einer Brühvorrichtung aus einer Brühkammer und einem Brühkolben sowie einer Gewindespindel zum Antrieb der Brühkammer, die dazu über einen Verbindungsarm zur Gewindespindel verfügt, der als Spindelmutter ausgebildet ist. Die Gewindespindel und die Brühvorrichtung sind folglich seitlich nebeneinander angeordnet. Das Gehäuse dient unter anderem zur Lagerung der Brühvorrichtung, indem es beidseitige Lager für die Gewindespindel aufnimmt.

Die WO 2009/056 426 A1 offenbart eine Spindelbrüheinheit, in der die Gewindespindel ebenfalls neben der Brühkammer angeordnet und beide in einem C-förmigen Gehäuse gelagert sind. Bei dieser Bauform ergibt sich ein starkes Kippmoment während des Zubereitungsvorgangs, weshalb das Gehäuse sehr stabil ausgebildet sein muss. Das Gehäuse weist unter anderem zusätzliche Gleitführungen der Brühkammer auf, um noch Stützkräfte hervorzurufen, die dem Kippmoment entgegenwirken. Das verbleibende Kippmoment jedoch muss von der Lagerung der Gewindespindel im Gehäuse aufgenommen werden. Um sie in das Gehäuse einsetzen zu können, ist das Gehäuse vertikal geteilt.

Die US 2010/0192 781 A1 offenbart ebenfalls ein vertikal geteiltes Gehäuse einer Spindelbrüheinheit, das jedoch wie ein geschlossener O- oder D-förmiger Rahmen ausgebildet ist. Er bildet zwar eine kraftflussgerechtere Konstruktion, schränkt aber die räumlichen Zugangsmöglichkeiten zur Befüllung und Entleerung der Brühkammer ein.

Aufgabe der Erfindung ist es, ein Gehäuse für eine Spindelbrüheinheit eines Kaffeevollautomaten anzugeben, das konstruktiv möglichst einfach aufgebaut und daher kostengünstig herzustellen und zu montieren ist.

Diese Aufgabe wird bei einem eingangs genannten Kaffeevollautomaten erfindungsgemäß dadurch gelöst, dass die Gewindespindel an nur einem Ende mittels eines Festlagers im Gehäuse gelagert ist. Das Festlager stellt ein Radial-Axial-Lager dar, in dem alle Translationsbewegungen der Gewindespindel und alle Kippmomente aufgenommen werden. Das Rotationsmoment auf die Gewindespindel stellt den einzigen verbleibenden Freiheitsgrad des Festlagers dar. Die Erfindung wendet sich also davon ab, die Gewindespindel jeweils an ihren beiden Enden im Gehäuse der Spindelbrüheinheit gleichartig zu lagern und die auftretenden Kräfte folglich weitgehend gleichmäßig auf das Gehäuse zu verteilen. Sie verfolgt vielmehr das entgegengesetzte Prinzip, nur ein Ende der Gewindespindel in einem Festlager mit nur einem Freiheitsgrad zu lagern, so dass vor allem sämtliche axialen Kräfte an nur einem Ende der Spindel auf das Gehäuse übertragen werden. Das Festlager kann an einem oberen oder an einem unteren Ende einer vertikal stehenden Gewindespindel bzw. an einem vorderen oder hinteren bzw. an einem rechten oder linken Ende einer liegenden Gewindespindel angeordnet sein. Am jeweils gegenüberliegenden Ende kann sich daher ein weniger leistungsfähiges Lager befinden, beispielsweise lediglich eine Lagerschale, die mit weiteren bzw. größeren Toleranzen behaftet und daher weniger aufwendig hergestellt sein kann. Je leistungsfähiger es ausgebildet ist, je mehr Kräfte es also übernehmen kann, umso mehr kann es allerdings das gegenüberliegende (Fest-)Lager entlasten. Prinzipiell aber nimmt das Festlager so gut wie alle Lagerkräfte auf und leitet sie in das Gehäuse weiter, so dass am anderen Ende der Gewindespindel idealerweise kaum oder keine Kräfte mehr wirken. Das gegenüberliegende Lager und das entsprechende Gehäusesegment, in dem es angeordnet ist, können folglich weniger steif, leichter und damit kostengünstiger ausgelegt werden. Dadurch lässt sich der Aufbau des Gehäuses für die Spindelbrüheinheit vereinfachen.

Während eines Brühvorgangs wird die Brühkammer auf den Brühkolben aufgeschoben und anschließend der Brühvorgang durchgeführt. Dabei treten regelmäßig die größten Kräfte auf. Kippmomente können aus Druckkräften entstehen, die während des Brühvorgangs auf die Brühkammer wirken oder in der Brühkammer auftreten. Wenn die Brühkammer gegenüber der Gewindespindel auskragt, wirken die bezüglich der Spindelachse exzentrischen Druckkräfte als Kippmomente auf die Gewindespindel, die in den Lagern aufgenommen werden müssen. Je weiter entfernt vom jeweiligen Lager die Duckkräfte auftreten, umso länger sind - bei im Übrigen unveränderten Druckkräften - die Kraftflusswege zum jeweiligen Lager. Zusätzlich müssen die Lager die dazugehörigen Druckkräfte in axialer Richtung der Spindelachse aufnehmen. Diejenigen in radialer Richtung dagegen werden von der zylinderförmigen Brühkammer aufgenommen. Nach einer vorteilhaften Ausgestaltung der Erfindung ist daher das Festlager in demjenigen Abschnitt des Gehäuses angeordnet, in dem die Brühvorrichtung und insbesondere die Brühkammer während eines Brühvorgangs positioniert sind. Da der feststehende Brühkolben am Gehäuse gelagert ist und regelmäßig eine von zwei Endpositionen der Brühkammer auf der Gewindespindel definiert, liegt er einem der beiden Lager der Gewindespindel im Gehäuse näher. Ist das näher liegende Lager als Festlager ausgebildet, so ergibt sich während eines Brühvorgangs ein verhältnismäßig kurzer Kraftfluss aus der Brühvorrichtung über die Brühkammer, ihren Verbindungsarm zur Gewindespindel und in das Festlager hinein. Der kurze Weg des Kraftflusses bedeutet weniger oder kleinere Bauteile, die der Belastung ausgesetzt sind, und geringere Momente, die das Festlager aufnehmen muss. Das Festlager kann daher weniger aufwendig ausgestaltet sein. Damit lässt sich auch der entsprechende Gehäuseteil, in den das Festlager die auftretenden Kräfte und Momente einleitet, weniger aufwendig und daher kostengünstiger herstellen. Das andere Gehäuseteil wird damit ebenfalls mit geringeren Belastungen beaufschlagt, so dass es seinerseits weniger aufwendig und damit kostengünstiger ausgebildet sein kann.

Als eine günstige Gehäuseform hat sich eine C-Form für die Lagerung einer stehenden Gewindespindel erwiesen. Gemäß einer älteren, noch unveröffentlichten Anmeldung des Anmelders mit der Nummer ***10 2013 202 149.6*** bietet sich für ein derartiges C-förmiges Gehäuse eine horizontale Teilung in ein oberes Gehäuseteil oder eine Deckeneinheit und in ein unteres Gehäuseteil oder eine Bodeneinheit an. Der Brühkolben ist regelmäßig an der Deckeneinheit angebracht, so dass sich die Brühkammer während eines Brühvorgangs ebenfalls in der Deckeneinheit befindet. Vorteilhafterweise ist dann das Festlager ebenfalls in der Deckeneinheit untergebracht, um einen kurzen Weg des Kraftflusses während eines Brühvorgangs von der Brühkammer über die Gewindespindel und das Festlager in die obere Deckeneinheit und von dort zurück in den Brühkolben hervorzurufen. Der kurze Weg des Kraftflusses bedeutet geringere Momente, auf die die Deckeneinheit ausgelegt sein muss. Da aber die wesentlichen Kräfte während eines Brühvorgangs in der Deckeneinheit auftreten, braucht nur sie für diese Kräfte bzw. Momente ausgelegt zu sein. Die Bodeneinheit dagegen erfordert nicht die gleiche Stabilität und Steifigkeit und kann daher kostengünstiger ausgebildet sein.

Das Festlager kann nach dem Prinzip einer Wälzlagerung aufgebaut sein. In einer einfachen Ausführungsform kann das Festlager als Gleitlager ausgebildet sein, wobei zwei Flansche auf endseitigen Wellenstutzen der Gewindespindel eine ringförmige Lagerschale am Gehäuse zwischen sich einschließen und damit ein äußerer Flansch auf einer Außenseite und ein innerer Flansch auf einer Innenseite des Gehäuses anliegen. Beide Flansche leiten damit auf die Gewindespindel wirkende Kräfte in einer axialen Richtung in das Gehäuse ab. Gemeinsam können sie Kippmomente der Gewindespindel am Festlager abstützen.

Für eine einfache Konstruktion der Lagerung der Gewindespindel im Gehäuse bietet sich ein geteiltes oder teilbares Festlager an. Dazu kann das Festlager Lagerschalen als feststehenden Bestandteil des Gehäuses umfassen, die sich um zylindrische Wellenzapfen an den axialen Enden der Gewindespindel schließen lassen. Flansche an den Wellenzapfen können auf die Gewindespindel wirkende axiale Kräfte und Kippmomente im Festlager einleiten. Damit kann die Gewindespindel einteilig und damit kostengünstig herstellbar ausgebildet sein und unkompliziert montiert werden. Nach einer vorteilhaften Ausgestaltung der Erfindung kann die Gewindespindel am Festlager zwei Flansche umfassen, wobei einer der beiden Flansche separat von der Gewindespindel und für den bestimmungsgemäßen Einsatz der Gewindespindel am Wellenzapfen befestigbar ausgebildet ist. Der separate Flansch ermöglicht eine einteilige und ungeteilte Ausbildung einer ringförmigen Lagerschale als Bestandteil des Festlagers am Gehäuse. Hierdurch kann der Deckenabschnitt des Gehäuses einteilig und damit stabiler und kompakter ausgebildet sein, als wenn an Fügestellen geteilter Lagerschalen Kräfte und Momente aufgenommen werden müssten.

Nach einer weiteren vorteilhaften Ausgestaltung der Erfindung kann zumindest einer der beiden Flansche als separater Ring ausgebildet sein, der zur betriebsbereiten Montage der Gewindespindel auf den Wellenzapfen aufsetzbar und zur Ausbildung des Festlagers dort befestigbar ist. Der Begriff "aufsetzbar" soll dabei bezüglich der Befestigungsmethode nicht einschränkend verstanden werden, sondern umfasst sowohl ein unlösbares als auch ein lösbares Befestigen. Sowohl der innere als auch der äußere Flansch und sowohl nur einer, als auch beide Flansche können in dieser Weise ausgebildet sein und damit die Herstellung der Gewindespindel vereinfachen. Sie können aus demselben Material wie sie oder aus einem davon abweichenden Material ausgebildet sein, was nicht zuletzt von der Art der Befestigung der ringförmigen Flansche auf der Gewindespindel abhängen kann.

Ist der äußere Flansch separat und befestigbar ausgebildet, kann die Gewindespindel von einer Innenseite des Gehäuses aus mit ihrem Wellenstutzen voran in bzw. durch die Lagerschale des Festlagers hindurch geschoben und der äußere Flansch von außen auf den Wellenstutzen aufgesetzt und dort befestigt werden. Alternativ kann der innere Flansch separat und befestigbar ausgebildet sein. Die Gewindespindel kann dann von einer Außenseite des Gehäuses aus in das Festlager eingeschoben werden. Der separate Flansch wird dann von einer Innenseite aus über die Gewindespindel geschoben und dort am Wellenstutzen und gegen eine Innenseite des Gehäuseabschnitts anliegend befestigt. Da der Flansch über einen Gewindeabschnitt der Gewindespindel geschoben wird, ist sein Innendurchmesser und damit der Außendurchmesser des betreffenden Wellenstutzens gleich oder größer als derjenige des Gewindeabschnitts auszubilden.

Nach einer vorteilhaften Ausgestaltung der Erfindung kann die Gewindespindel einen Achsabschnitt mit einem T-förmigen Querschnitt mit einem Wellenzapfen und einem breiten Kopf als Flansch umfassen. Im Betrieb durchgreift der Wellenzapfen das Gehäuse am Festlager unmittelbar und ist koaxial an einem Ende der Gewindespindel befestigt. Der T-förmige Achsabschnitt stellt folglich eine einteilige Kombination aus einem Wellenstutzen und einem äußeren Flansch dar, der sich von außen auf eine von innen in das Gehäuse eingesetzte Gewindespindel montieren lässt. Da der T-förmige Achsabschnitt unabhängig von der Gewindespindel hergestellt werden kann, kann der Wellenstutzen des T-förmigen Achsabschnitts unabhängig von der Gewindespindel auf die Lagerschalen abgestimmt sein, beispielsweise durch eine separate Oberflächenbearbeitung oder Materialauswahl.

Nach einer dazu alternativen Ausgestaltungsform der Erfindung kann der separate und befestigbare Flansch einen angeflanschten Wellenabschnitt umfassen, mit dem er im Wellenstutzen der Gewindespindel befestigbar ist und der das Gehäuse ggf. nur mittelbar, nämlich umhüllt vom Wellenabschnitt durchgreift. Damit kann der äußere Flansch aus einem anderen Material als die übrige Gewindespindel ausgebildet sein, was zum Beispiel den Lagereigenschaften zugute kommen kann. Zusätzlich kann auch der innere Flansch separat, ggf. aus einem anderen Material und ringförmig ausgebildet sein, wenn er sich auf den Wellenstutzen aufschieben und befestigen lässt, bevor die Gewindespindel in den Deckenabschnitt eingeschoben und der äußere Flansch am Wellenstutzen befestigt wird. Dann ergibt sich ein Festlager, bei dem die Gewindespindel und ihre Wellenstutzen aus demselben Material, die daran angebrachten Flansche dagegen aus einem davon abweichenden Material ausgebildet sein können. Da die Lagerschalen im Gehäuse ausgebildet sind, lassen sich somit alle im Festlager zusammenwirkenden feststehenden und bewegten Teile auf eine optimale Materialpaarung und auf ihre jeweiligen Anforderungen hin auswählen und zusammenstellen.

Grundsätzlich können die Flansche oder der T-förmige Achsabschnitt zum Beispiel durch Schweißen, Kleben, Verkeilen oder Verschrauben dauerhaft an der Gewindespindel befestigt sein. Nach einer vorteilhaften Ausgestaltung der Erfindung kann ein Flansch oder ein Achsabschnitt am Wellenstutzen oder an der Gewindespindel reversibel befestigbar oder von ihm oder von ihr lösbar ausgebildet sein. Die Befestigung muss also nicht irreversibel sein, sondern kann insbesondere zu Reparaturzwecken wieder gelöst werden, um ein Trennen der Gewindespindel vom Gehäuse zu vereinfachen. Eine derartige lösbare Verbindung kann beispielsweise durch einen Schnapp-, Klipp- oder Bajonettverschluss oder dergleichen erzielt werden. So kann auch eine Schraubverbindung vorgesehen sein, wofür ein Gewinde jeweils in den Wellenstutzen und in den Flansch oder Achsabschnitt eingeschnitten wird, so dass der Flansch auf oder der Achsabschnitt an oder in die Gewindespindel geschraubt werden kann.

Das horizontal geteilte Gehäuse kann einen Deckenabschnitt und einen Bodenabschnitt umfassen. Nach dem Einsetzen der Gewindespindel können sie dauerhaft miteinander verbunden werden, beispielsweise verschweißt oder verklebt werden. Nach einer vorteilhaften Ausgestaltung der Erfindung können die Bodeneinheit und/oder die Deckeneinheit Fixierelemente zum gegenseitigen Fixieren aufweisen. Die Fixierelemente eignen sich vorteilhafterweise dazu, das Gehäuse wieder zerlegen zu können, sind also zerstörungsfrei voneinander lösbar konstruiert. Hierfür eignet sich zum Beispiel eine Verschraubung der Gehäuseabschnitte an ihrer Trenn- bzw. Fügestelle.

Nach einer vorteilhaften Ausgestaltung der Erfindung umfassen die Fixierelemente Rasthaken an der einen Gehäuseeinheit, die in Rastnischen an oder in der anderen Gehäuseeinheit einrasten. Ein Verhaken der Decken- und der Bodeneinheit aneinander kann ohne die Zuhilfenahme von Werkzeugen erfolgen und zerstörungsfrei zum Aushaken der Rastnasen wieder gelöst werden. Dadurch erleichtert sich jedenfalls die Montage des Gehäuses.

Nach einer weiteren vorteilhaften Ausgestaltung der Erfindung sind die Rastelemente derart an der Bodeneinheit und/oder an der Deckeneinheit angeordnet, dass sich die beiden Einheiten durch ein Verdrehen relativ zueinander um eine Achse parallel zur Spindelachse nach Art eines Bajonettverschlusses befestigen lassen. Zusätzlich kann eine Verdrehsicherung vorgesehen sein, die ein Verdrehen der Einheiten gegeneinander in einer zur Montagerichtung entgegengesetzten Richtung verhindert. Eine derartige Befestigung und ggf. die Verdrehsicherung lassen sich an der Bodeneinheit und an der Deckeneinheit, die vorzugsweise als Spritzgussteile aus Kunststoff ausgebildet sind, kostengünstig mit ausbilden, so dass dafür keine separaten Herstellungskosten aufgewendet werden müssen. Da die wesentlichen Belastungen aus dem Brühvorgang in der Deckeneinheit eingeleitet und aufgenommen werden, die Bodeneinheit währenddessen weitgehend unbelastet ist, brauchen auch die Rastelemente keine großen Kräfte zu übertragen, weshalb sie einfacher ausgebildet sein können. Dadurch verbilligt sich die Herstellung insbesondere der Bodeneinheit des Gehäuses.

Das Prinzip der Erfindung wird im Folgenden anhand einer Zeichnung beispielsweise noch näher erläutert. In der Zeichnung zeigen:
- Figur 1:: einen schematischen Querschnitt durch einen Kaffeevollautomaten,
- Figur 2:: eine erste Ausführungsform eines Festlagers einer Gewindespindel,
- Figur 3:: eine zweite Ausführung eines Festlagers,
- Figuren 4 bis 6:: die Montage des Gehäuses.

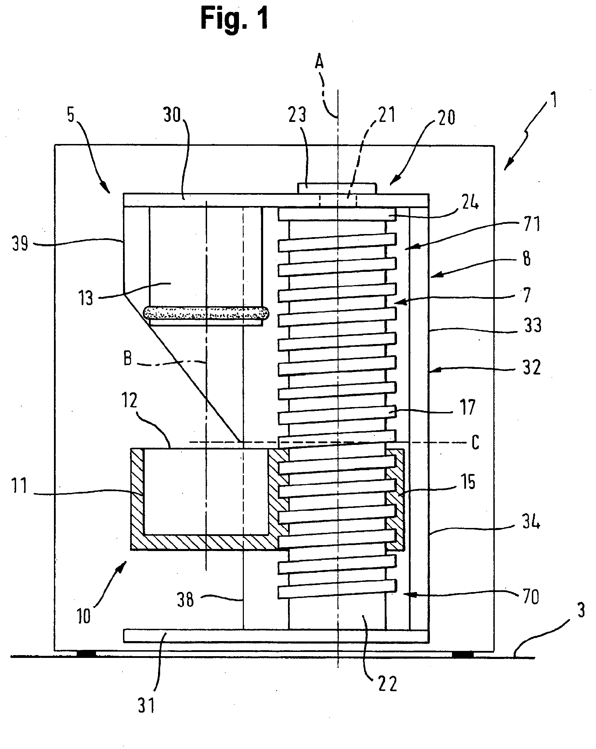

Figur 1 zeigt stark schematisiert einen Kaffeevollautomaten 1, der auf einer horizontalen Aufstandfläche 3 steht. Er enthält eine Spindelbrüheinheit 5, die in einem C-förmigen Gehäuse 8 untergebracht ist. Die übrigen Aggregate sind der Einfachheit halber nicht dargestellt. Das C-förmige Gehäuse 8 setzt sich aus einer horizontal verlaufenden Deckplatte 30, einem senkrecht stehenden Ständer 32 und einer horizontal verlaufenden Bodenplatte 31 zusammen. Die Deckplatte 30, der Ständer 32 und die Bodenplatte 31 ergeben die C-Form des Gehäuses 8. Sie sind in zwei Ebenen parallel zur Blattebene durch nicht näher bezeichnete, sich vertikal erstreckende Seitenwände abschnittsweise miteinander verbunden. Die Deckplatte 30, der Ständer 32 und die Bodenplatte 31 bilden damit einen einseitig offenen Rahmen, der an einer dem Ständer 32 gegenüberliegenden Seite offen ist, aber durch die Seitenwände ausgesteift ist. Das Gehäuse 8 ist nicht einteilig, sondern entlang einer horizontalen Trennebene C in eine Bodeneinheit oder einen Bodenabschnitt 38 und eine Deckeleinheit oder einen Deckelabschnitt 39 geteilt. Dadurch sind nicht nur die Seitenwände, sondern insbesondere auch der Ständer 32 in ein Oberteil 33 und ein Unterteil 34 unterteilt.

In dem C-förmigen Gehäuse 8 ist eine senkrecht angeordnete Gewindespindel 7 mit einem Gewindeabschnitt 17 um ihre vertikale Spindelachse A drehbar gelagert. Dazu sind zylindrische Wellenstutzen 21, 22, die an den Gewindeabschnitt 17 endseitig axial anschließen, in Gleitlagern in der Deckplatte 30 und in der Bodenplatte 31 drehbar gehalten.

An dem Gewindeabschnitt 17 hängt ein Brühkammergehäuse 15, das eine zylindrische Brühkammer 11 mit einer Brühzylinderachse B und mit einer oberseitigen kreisrunden Öffnung 12 einer Brühvorrichtung 10 enthält. Das Brühkammergehäuse 15 ist entlang der Spindelachse A durch Drehung der Gewindespindel 7 vertikal verfahrbar. Von einer dargestellten abgesenkten Position kann es mittels Drehung der Gewindespindel 7 in eine Brühposition verfahren werden, in der ein zylindrischer Brühkolben 13, der an der Deckplatte 30 befestigt ist, durch die Öffnung 12 in die Brühkammer 11 eintaucht. In dieser Position, in der sich die verfahrbare Brühkammer 11 im Bereich des Deckelabschnitts 39 des Gehäuses 8 befindet, findet der Brühvorgang statt. Beim Verfahren der Brühkammer 11 auf den Brühkolben 13 hin, zum Beispiel, um Kaffeepulver in der Brühkammer 11 zu verdichten, und erst recht bei dem anschließenden Injizieren von Brühwasser unter Druck treten große Kräfte in der Brühkammer 11 auf. Während die horizontalen Kräfte von der zylindrischen Brühkammer 11 aufgenommen werden, wirken die vertikal abwärts gerichteten Druckkräfte aufgrund der Exzentrizität der Brühkammerachse B gegenüber der Spindelachse A als Kippmoment auf das Brühkammergehäuse 15 und damit auf die Gewindespindel 7. Auch vertikale Kraftanteile werden auf die Gewindespindel 7 übertragen, die diese Kräfte über ihre Lagerung an das Gehäuse 8 abgibt.

Erfindungsgemäß ist die Gewindespindel 7 an ihrem oberen Ende 71 ausschließlich im Deckelabschnitt 39 in einem Festlager 20 allseitig in radial-axialer Funktion gelagert. Am gegenüberliegenden unteren Ende 70 ist der dortige Wellenstutzen 22 lediglich lose in einer nicht dargestellten Lagerpfanne in der Bodenplatte 31 gehalten. Das Festlager 20 dagegen bietet der Gewindespindel 7 lediglich einen Freiheitsgrad, nämlich die Drehung um ihre vertikale Achse A. Alle übrigen Belastungen, also die Kräfte in den drei Raumrichtungen sowie die verbleibenden Kippmomente, werden im Festlager 20 aufgenommen. Es ist als Gleitlager ausgebildet und umfasst einen äußeren Flansch 23 und einen inneren Flansch 24, die an dem oberen Wellenstutzen 21 befestigt sind. Sie stützen die Kippmomente und auftretende Vertikalkräfte in der Achsrichtung A am Gehäuse 8 ab. Horizontalkräfte gibt der Wellenstutzen 21 direkt in die Deckplatte 30 ab.

Während eines Brühvorgangs befinden sich der feststehende Brühkolben 13, die verfahrbare Brühkammer 11 und das Festlager 20 im Bereich des Deckelabschnitts 39 des Gehäuses 8. Da die Hauptbelastungen während eines Brühvorgangs auftreten, kann durch diese Anordnung ein kurzer Weg für den Kraftfluss aus den Belastungen in der Brühkammer 11 über das Brühkammergehäuse 15 und die Gewindespindel 7 auf das Gehäuse 8 erzielt werden. Am gegenüberliegenden unteren Ende 70 der Gewindespindel 7 dagegen genügt eine sehr einfache Lagerung, z.B. eine Lagerschale, die gewisses Spiel zulässt, weil dort kaum Kräfte eingeleitet werden. Damit braucht lediglich der Deckelabschnitt 39 des Gehäuses 8 steif ausgebildet und auf die auftretenden Kräfte bemessen zu werden. Der Bodenabschnitt 38 des Gehäuses 8 dagegen kann verhältnismäßig einfach und konstruktiv schlanker ausgebildet werden, weil er nur weitaus geringeren Belastungen standhalten muss. Durch die Teilungen des Gehäuses 8 an der Trennebene C in den Deckelabschnitt 39 und den Bodenabschnitt 38 lässt sich die Gewindespindel 7 bequem in den Deckelabschnitt 39 einsetzen und im Festlager 20 montieren. Daraufhin kann der Bodenabschnitt 38 am Deckelabschnitt 39 befestigt werden, womit auch der unterseitige Wellenstutzen 22 seine Lagerung erhält.

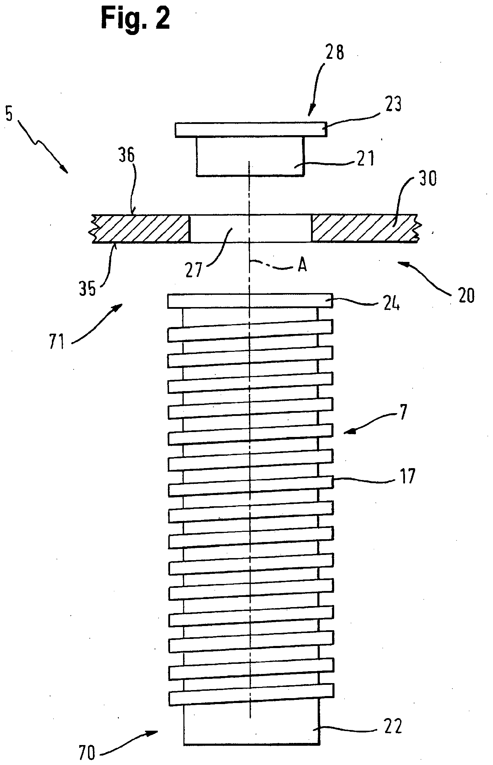

Figur 2 zeigt eine erste Ausführungsform für ein erfindungsgemäßes Festlager 20: Die Gewindespindel 7 ist an ihrem unteren Ende 70 weitgehend konventionell ausgestattet, wonach der Gewindeabschnitt 17 in einen Wellenstutzen 22 ausläuft. Dort wird die Gewindespindel 7 in einer Lagerschale gehalten. Am oberen Ende 71 dagegen schließt der Gewindeabschnitt 17 an einen innen ringförmig offenen Flansch 24 an. Im Betrieb liegt der Flansch 24 an einer Innen- oder Unterseite 35 der Deckplatte 30 an. Zur Ausbildung des Festlagers 20 weist die Deckplatte 30 eine kreisrunde Achsaufnahme 27 auf, die die Lagerschale des Festlagers 20 für die Gewindespindel 7 darstellt. Sie nimmt entsprechend Figur 1 den Wellenstutzen 21 auf, jener hier als Ansatz, an dem ein äußerer Flansch 23 angeflanscht ist. Er stützt sich im Betrieb an einer Außen- oder Oberseite 36 der Deckplatte 30 ab. Gemeinsam stellen der Wellenstutzen 21 und der Flansch 23 einen im Querschnitt T-förmigen Achsenabschnitt 28 dar, der als separater Bestandteil der Gewindespindel 7 ausgebildet ist und zur Montage der Gewindespindel 7 im Gehäuse 8 in der durchmessergleichen Achsaufnahme 27 eingesetzt und anschließend mit der Gewindespindel 7 verbunden wird. Dazu wird die Gewindespindel 7 von der Unterseite 35 aus an der Deckplatte 30 positioniert, während der Achsabschnitt 28 von der Oberseite 36 aus mit dem Wellenstutzen 21 voran durch die Achsaufnahme 27 geschoben wird. Der Achsabschnitt 28 kann dauerhaft beispielsweise durch Kleben oder Schweißen mit der Gewindespindel 7 verbunden oder auch lösbar an ihr montiert werden. Bei einer lösbaren Ausbildung, beispielsweise über ein Gewinde oder einen Bajonettverschluss, lässt sich die Gewindespindel 7 beispielsweise für Reparaturzwecke auch nachträglich vom Deckelabschnitt 39 des Gehäuses 8 zerstörungsfrei trennen. Durch die separate Ausbildung des Achsenabschnitts 28 besteht die Möglichkeit, dessen Material speziell auf seine Funktion als Lagerung der Gewindespindel 7 in einem Gleitlager abzustellen. So kann der Wellenstutzen 21, der in der Achsaufnahme 27 gleitet, beispielsweise eine spezielle Oberflächenbehandlung erhalten, ohne dass die Gewindespindel 7 davon beeinflusst wäre. Und/oder es kann nur ein in die Achsaufnahme 27 eingepresster spezieller Gleitlagerring die Radial-Axial-Lagerfunktion ausüben. Dabei braucht am Gehäuse 8 in Bereich der Achsaufnahme 27 keine aufwändige Oberflächenbehandlung vorgenommen zu werden, und es kann aus einfachem Material geformt werden.

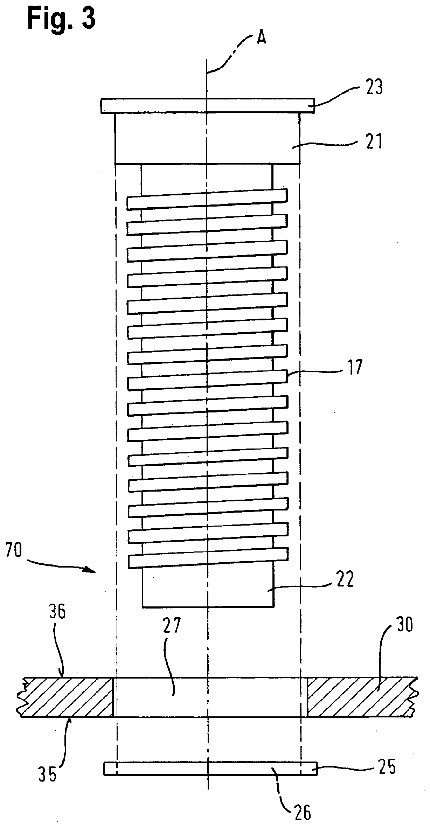

Figur 3 zeigt eine alternative Ausführungsform des Festlagers 20: Demnach hat der dortige Wellenstutzen 21 einen Durchmesser, der größer als der des Gewindeabschnitts 17 ist. Der Radius des Flansches 23 übertrifft wiederum den des Wellenstutzens 21. Während der Wellenstutzen 21 und der äußere Flansch 23 - anders als gemäß Figur 2 - mit der Gewindespindel 7 fest verbunden bzw. einstückig mit ihr ausgebildet sind, stellt der innere Flansch 25 einen Ring mit einem Durchbruch 26 dar. Der Durchmesser des Durchbruchs 26 ist größer als der Durchmesser des Gewindeabschnitts 17 der Gewindespindel 7, der Außendurchmesser des Flanschs 25 ist wiederum größer als der Durchmesser des Durchbruchs 27 der Deckplatte 30. Diese Konstruktion führt dazu, dass die Gewindespindel von einer Außen- oder Oberseite 36 des Gehäuses 8 durch die Achsaufnahme 27 eingeschoben werden kann, bis der Wellenstutzen 21 in der Achsaufnahme 27 als Lagerschale anliegt. Eine weitere Verschiebung abwärts entlang der Rotationsachse A verhindert der größere äußere Flansch 23. Der ringförmige innere Flansch 25 ergänzt das Festlager 20, in dem es nun vom unteren Ende 70 der Gewindespindel 7 aus über den Gewindeabschnitt 17 aufgeschoben wird, bis er auf dem Wellenstutzen 21 zum Liegen kommt und dort befestigt wird. Auch er kann dort dauerhaft oder lösbar befestigt werden, um die Gewindespindel 7 gegebenenfalls zerstörungsfrei demontieren zu können. In dieser Ausführungsform kann das Gehäuse 8 einteilig, also ungeteilt ausgebildet werden, um die Gewindespindel 7 darin zu montieren. Denn sie kann mit ihrem unteren Ende 70 bzw. im dortigen Wellenstutzen 22 in einer einfachen Lagerschale in der Bodenplatte 31 (vgl. Figur 1) aufgenommen und gehalten werden.

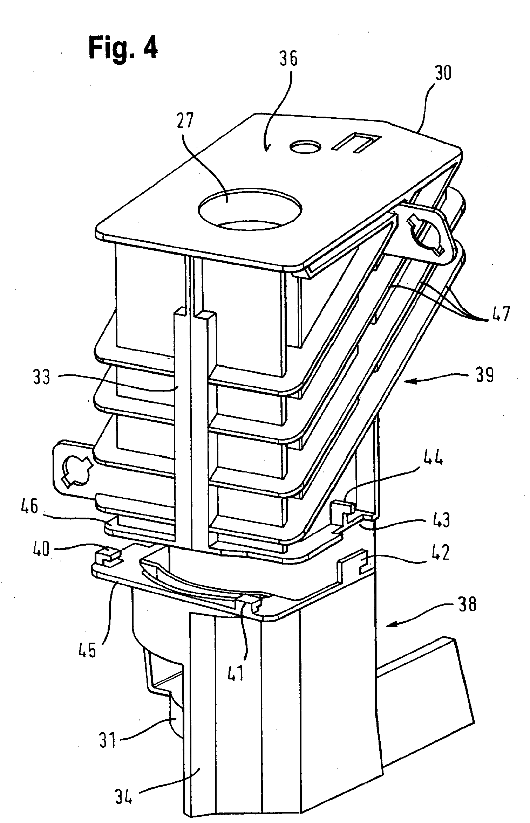

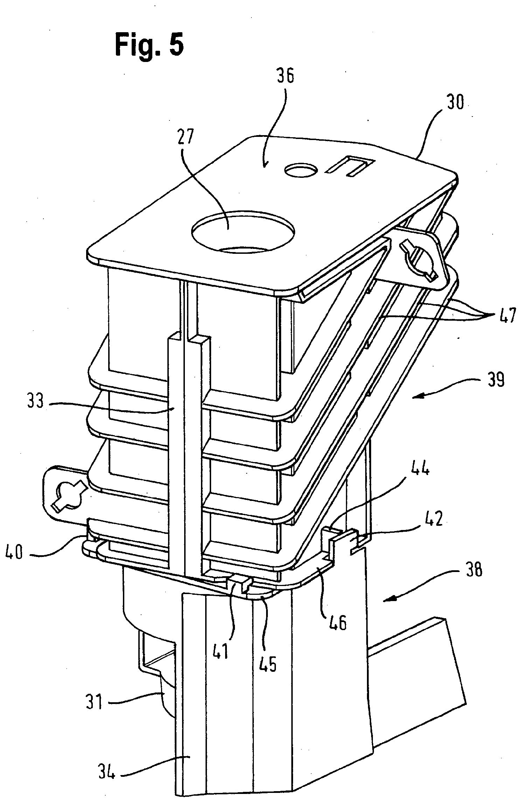

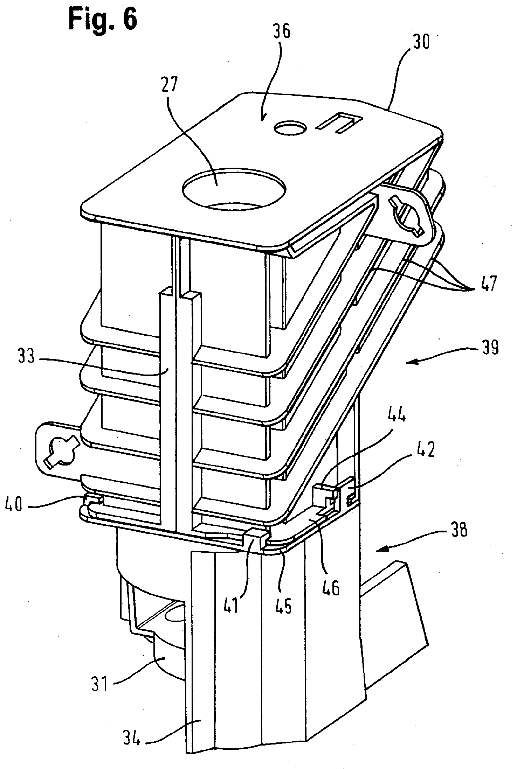

Die Figuren 4 bis 6 zeigen ein in einen Bodenabschnitt 38 und einen Deckelabschnitt 39 geteiltes Gehäuse 8 und dessen Montage: Der Bodenabschnitt 38 setzt sich im Wesentlichen aus einer Bodenplatte 31 und einem Unterteil 34 des Ständers 32 zusammen. Am Deckelabschnitt 39 stützt sich die Deckplatte 30, die die Achsaufnahme 27 als Bestandteil des Festlagers 20 (vgl. Figuren 1 bis 3) enthält, über Seitenwände mit diagonalen Versteifungsrippen 47 am Oberteil 33 des vertikalen Ständers 32 (vgl. Figur 1) ab.

An der Trennebene C (vgl. Figur 1) weist der Bodenabschnitt 38 eine Platte 45 auf, von der L-förmige Rasthaken 40, 41 vertikal abstehen, so dass das L "verkehrt herum" steht und mit seinem waagrechten Schenkel nach innen weist. Ein Schnapphaken 42 an der Platte 45 korrespondiert mit einer rechteckigen Ausklinkung 43, die in einem Saum 46 am Deckelabschnitt 39 angebracht ist. Neben der Ausklinkung 43 ragt ein Winkelhaken 44 auf.

Die Rasthaken 40, 41, der Schnapphaken 42, die Ausklinkung 43 und die Dicke des Saums 45 sind so angeordnet und in ihren Abmessungen so aufeinander abgestimmt, dass der Deckelabschnitt 39 und der Bodenabschnitt 38 wie mit einem Bajonettverschluss miteinander gekoppelt werden können. Dazu wird der Deckelabschnitt 39 mit einer geringfügigen Verdrehung von etwa 5° um eine vertikale Achse auf den Bodenabschnitt 38 aufgesetzt. Die Verdrehung bewirkt, dass der Saum 46 neben den Rasthaken 40, 41 liegt. Die Ausklinkung 43 ist so bemessen, dass der Schnapphaken 42 durch ihn hindurch ragt. Dabei liegt der Saum 46 auf der Platte 45 glatt auf. Allerdings verbiegt der Winkelhaken 44 mit seinem waagrechten Schenkel den Schnapphaken 42 nach außen. Bei einer anschließenden geringfügigen Verdrehung des Deckelabschnitts 39 greifen die Rasthaken 40, 41 über den Saum 46 des Deckelabschnitts 39. Der Schnapphaken 42 greift in die Ausklinkung 43 im Saum 46 ein und begrenzt eine weitere Verdrehung. Zugleich schnappt der waagrechte Schenkel des Winkelhakens 44 hinter den Schnapphaken 42, so dass dieser nicht mehr nach außen abgebogen wird. Damit ist auch eine Verdrehung in der Gegenrichtung gehemmt. Jetzt sind die beiden Gehäusebestandteile, nämlich der Deckelabschnitt 39 und der Bodenabschnitt 38, aneinander befestigt. Aufgrund der geringen Kräfte, die in der Trennebene C (vgl. Figur 1) über die erläuterte Fixiereinrichtung übertragen werden müssen, können sie, also insbesondere die Rasthaken 40, 41 und der Schnapphaken 42, verhältnismäßig einfach und konstruktiv unaufwendig ausgestaltet sein. Die Kopplung nach Art eines Bajonettverschlusses ermöglicht darüber hinaus die werkzeugfreie Montage des Bodenabschnitts 38 am Deckelabschnitt 39, was die Montage vereinfacht und verbilligt.

### Materialien spezifizieren: radial gleitfähig, axial tragfähig

Da es sich bei den vorhergehenden, detailliert beschriebenen Kaffeevollautomaten um Ausführungsbeispiele handelt, können sie in üblicher Weise vom Fachmann in einem weiten Umfang modifiziert werden, ohne den Bereich der Erfindung zu verlassen. Insbesondere können auch die konkreten Ausgestaltungen der Lager in anderer Form als in der hier beschriebenen und nicht zuletzt als Wälzlager erfolgen. Ebenso kann die Spindelbrüheinheit in einer anderen Form ausgestaltet sein, wenn dies aus Platzgründen bzw. designerischen Gründen notwendig ist. Weiterhin schließt die Verwendung der unbestimmten Artikel "ein" bzw. "eine" nicht aus, dass die betreffenden Merkmale auch mehrfach vorhanden sein können.

### Bezugszeichenliste

- 1: Kaffeevollautomat
- 3: Aufstandsfläche
- 5: Spindelbrüheinheit
- 7: Gewindespindel
- 8: Gehäuse der Spindelbrüheinheit 5
- 10: Brühvorrichtung
- 11: Brühkammer
- 12: Öffnung
- 13: Brühkolben
- 15: Brühkammergehäuse
- 17: Gewindeabschnitt
- 20: Festlager
- 21: Wellenstutzen
- 22: Wellenstutzen
- 23: äußerer Flansch
- 24: innerer Flansch
- 25: innerer Flansch
- 26: Durchbruch
- 27: Achsaufnahme
- 28: Achsabschnitt
- 30: Deckplatte
- 31: Bodenplatte
- 32: Ständer
- 33: Oberteil des Ständers 32
- 34: Unterteil des Ständers 32
- 35: Unterseite
- 36: Oberseite
- 38: Bodenabschnitt des Gehäuses 8
- 39: Deckelabschnitt des Gehäuses 8
- 40: Rasthaken
- 41: Rasthaken
- 42: Schnapphaken
- 43: Ausklinkung
- 44: Winkelhaken
- 45: Platte
- 46: Saum
- 47: Versteifungsrippen
- 70: Unteres Ende der Gewindespindel 7
- 71: Oberes Ende der Gewindespindel 7

- A: Spindelachse
- B: Brühkammerachse
- C: Trennebene

## Patentansprüche

1. Kaffeevollautomat (1) für Haushaltszwecke, umfassend eine Spindelbrüheinheit (5) mit einer Brühvorrichtung (10) aus einer Brühkammer (11) und einem Brühkolben (13), mit einer Gewindespindel (7) zum Antrieb der Brühkammer (11) über einen Verbindungsarm (15) der Brühkammer (11) als Spindelmutter, wobei die Brühvorrichtung (10) seitlich neben der Gewindespindel (7) angeordnet ist, wobei das Gehäuse (8) zur Lagerung der Brühvorrichtung (10) und der Gewindespindel (7) dient,
**dadurch gekennzeichnet, dass** die Gewindespindel (7) an nur einem Ende (71) mittels eines Festlagers (20) im Gehäuse (8) gelagert ist.

2. Kaffeevollautomat nach Anspruch 1, **dadurch gekennzeichnet, dass** das Festlager (20) in demjenigen Abschnitt (39) des Gehäuses (8, 38, 39) angeordnet ist, in dem die Brühkammer (11) während eines Brühvorgangs positioniert ist.

3. Kaffeevollautomat nach Anspruch 1 oder 2 mit Wellenzapfen (21; 22) an der Gewindespindel (7), **dadurch gekennzeichnet, dass** die Gewindespindel (7) am Festlager (20) zwei Flansche (23; 24; 25) umfasst, die axiale Kräfte der Gewindespindel (7) am Gehäuse (8) abstützen, und einer der beiden Flansche (25) separat und am Wellenzapfen (21) befestigbar ausgebildet ist.

4. Kaffeevollautomat nach Anspruch 3, **gekennzeichnet durch** einen separaten Ring (24) als Flansch, der zur betriebsbereiten Montage der Gewindespindel (7) auf den Wellenzapfen (21) aufschiebbar und zur Ausbildung des Festlagers (20) dort befestigbar ist.

5. Kaffeevollautomat nach dem vorhergehenden Anspruch, **gekennzeichnet durch** einen Achsabschnitt mit einem T-förmigen Querschnitt, der das Gehäuse (8) durchgreift und im Betrieb koaxial an einem Ende (71) der Gewindespindel (7) fixiert ist.

6. Kaffeevollautomat nach einem der vorhergehenden Ansprüche, **gekennzeichnet durch** einen vom Wellenstutzen (21) oder der Gewindespindel (7) lösbaren Flansch (23; 25).

7. Kaffeevollautomat nach einem der vorhergehenden Ansprüche mit einem teilbaren Gehäuse (8) umfassend eine Bodeneinheit (38) und eine Deckeneinheit (39), **dadurch gekennzeichnet, dass** die Bodeneinheit (38) und/oder die Deckeneinheit (39) Fixierelemente (40; 41; 42) zum gegenseitigen Fixieren aufweisen.

8. Kaffeevollautomat nach Anspruch 7, **dadurch gekennzeichnet, dass** die Fixierelemente (40; 41; 42) werkzeuglos aktivierbare Rasthaken (40; 41) umfassen.

9. Kaffeevollautomat nach Anspruch 8, **dadurch gekennzeichnet, dass** die Rasthaken (40; 41) derart an der Bodeneinheit (38) und/oder an der Deckeneinheit (39) angeordnet sind, dass sich die Bodeneinheit (38) und die Deckeneinheit (39) durch ein Verdrehen nach Art eines Bajonettverschlusses aneinander fixieren lassen.

10. Kaffeevollautomat nach Anspruch 9, **gekennzeichnet durch** eine Verdrehsicherung (42, 43, 44) zur Hemmung einer Verdrehung entgegengesetzt zu einer Montagerichtung.

## Claims

1. Fully automatic coffee machine (1) for domestic purposes, comprising a spindle brewing unit (5) with a brewing apparatus (10) composed of a brewing chamber (11) and a brewing piston (13), having an elevating spindle (7) for driving the brewing chamber (11) via a connecting arm (15) of the brewing chamber (11) as a spindle nut, wherein the brewing apparatus (10) is arranged laterally adjacent to the elevating spindle (7), wherein the housing (8) serves to mount the brewing apparatus (10) and the elevating spindle (7),
**characterised in that** the elevating spindle (7) is mounted in the housing (8) at just one end (71) by means of a fixed bearing (20).

2. Fully automatic coffee machine according to claim 1, **characterised in that** the fixed bearing (20) is arranged in the section (39) of the housing (8, 38, 39) in which the brewing chamber (11) is positioned during a brewing process.

3. Fully automatic coffee machine according to claim 1 or 2 having journal extensions (21; 22) on the elevating spindle (7), **characterised in that** on the fixed bearing (20) the elevating spindle (7) comprises two flanges (23; 24; 25) which brace the axial forces of the elevating spindle (7) on the housing (8) and one of the two flanges (25) is embodied separately and in a manner so as to be fastenable to the journal extension (21).

4. Fully automatic coffee machine according to claim 3, **characterised by** a separate ring (24) as a flange, which, for operational assembly of the elevating spindle (7), can be slid onto the journal extension (21) and can be fastened there in order to form the fixed bearing (20).

5. Fully automatic coffee machine according to the preceding claim, **characterised by** an intercept with a T-shaped cross-section, which pierces the housing (8) and during operation is coaxially fixed to one end (71) of the elevating spindle (7).

6. Fully automatic coffee machine according to one of the preceding claims, **characterised by** a flange (23; 25) which can be detached from the journal extension (21) or the elevating spindle (7).

7. Fully automatic coffee machine according to one of the preceding claims with a separable housing (8) comprising a base unit (38) and a ceiling unit (39), **characterised in that** the base unit (38) and/or the ceiling unit (39) have fixing elements (40; 41; 42) for reciprocal fixing purposes.

8. Fully automatic coffee machine according to claim 7, **characterised in that** the fixing elements (40; 41; 42) comprise engagement hooks (40; 41) which can be activated without tools.

9. Fully automatic coffee machine according to claim 8, **characterised in that** the engagement hooks (40; 41) are arranged on the base unit (38) and/or on the ceiling unit (39) such that the base unit (38) and the ceiling unit (39) can be fixed to one another in the manner of a bayonet catch by means of twisting.

10. Fully automatic coffee machine according to claim 9, **characterised by** an anti-twist device (42, 43, 44) for blocking a twisting in the opposite direction to an assembly direction.

## Revendications

1. Machine à café entièrement automatique (1) à usage domestique, comportant une unité d'infusion à broche (5) avec un dispositif d'infusion (10) constitué d'une chambre d'infusion (11) et d'un piston d'infusion (13), avec une broche filetée (7) pour l'entraînement de la chambre d'infusion (11) par l'intermédiaire d'un bras de liaison (15) de la chambre d'infusion (11) en tant qu'écrou de broche, dans laquelle le dispositif d'infusion (10) est disposé latéralement à côté de la broche filetée (7), dans laquelle le carter (8) sert au montage du dispositif d'infusion (10) et de la broche filetée (7),
**caractérisée en ce que** la broche filetée (7) est montée dans le carter (8) au niveau d'une seule extrémité (71) au moyen d'un palier fixe (20).

2. Machine à café entièrement automatique selon la revendication 1, **caractérisée en ce que** le palier fixe (20) est disposé dans le tronçon (39) du carter (8, 38, 39) dans lequel la chambre d'infusion (11) est positionnée lors d'un processus d'infusion.

3. Machine à café entièrement automatique selon la revendication 1 ou la revendication 2 avec des tourillons d'arbre (21 ; 22) sur la broche filetée (7), **caractérisée en ce que** la broche filetée (7) comporte sur le palier fixe (20) deux brides (23 ; 24 ; 25) qui supportent les forces axiales de la broche filetée (7) sur le carter (8), et l'une des deux brides (25) est conçue séparément et de sorte à pouvoir être fixée sur le tourillon d'arbre (21).

4. Machine à café entièrement automatique selon la revendication 3, **caractérisée par** une bague séparée (24) en tant que bride qui peut être poussée sur le tourillon d'arbre (21) pour le montage fonctionnel de la broche filetée (7) et peut y être fixée pour la constitution du palier fixe (20).

5. Machine à café entièrement automatique selon la revendication précédente, **caractérisée par** un tronçon d'axe avec une section transversale en forme de T qui traverse le carter (8) et est fixé en cours de fonctionnement coaxialement au niveau d'une extrémité (71) de la broche filetée (7).

6. Machine à café entièrement automatique selon l'une des revendications précédentes, **caractérisée par** une bride (23 ; 25) détachable du manchon d'arbre (21) ou de la broche filetée (7).

7. Machine à café entièrement automatique selon l'une des revendications précédentes avec un carter (8) divisible comportant une unité de fond (38) et une unité de recouvrement (39), **caractérisée en ce que** l'unité de fond (38) et/ou l'unité de recouvrement (39) comprennent des éléments de fixation (40 ; 41 ; 42) pour une fixation mutuelle.

8. Machine à café entièrement automatique selon la revendication 7, **caractérisée en ce que** les éléments de fixation (40 ; 41 ; 42) comportent des crochets d'encliquetage (40 ; 41) actionnables sans outil.

9. Machine à café entièrement automatique selon la revendication 8, **caractérisée en ce que** les crochets d'encliquetage (40 ; 41) sont disposés sur l'unité de fond (38) et/ou sur l'unité de recouvrement (39) de telle sorte que l'unité de fond (38) et l'unité de recouvrement (39) puissent être fixées l'une sur l'autre par une rotation à la manière d'une fermeture à baïonnette.

10. Machine à café entièrement automatique selon la revendication 9, **caractérisée par** une sécurité antirotation (42, 43, 44) pour empêcher une rotation opposée à une direction de montage.
